# FASCICULE DE BREVET EUROPEEN

(11) **EP 4 242 399 B1**
(45) Date de publication et mention de la délivrance du brevet: **01.10.2025**
(21) Numéro de dépôt: 23160962.9
(22) Date de dépôt: 09.03.2023
(51) Int. Cl.: E04H 4/12

(54) **DISPOSITIF DE DISTRIBUTION D'EAU POUR ENTRETIEN D'UN BASSIN ARTIFICIEL**
WASSERABGABEVORRICHTUNG ZUR WARTUNG EINES KÜNSTLICHEN BECKENS
WATER SUPPLY DEVICE FOR MAINTENANCE OF ARTIFICIAL POOL

(30) Priorité: 09.03.2022 FR 2202055
(43) Date de publication de la demande: 13.09.2023
(73) Titulaire: Triquet, Eric, 74150 Rumilly (FR)
(72) Inventeur: Triquet, Eric, 74150 Rumilly (FR)
(74) Mandataire: Ipsilon

(56) Documents cités:
- EP-A1- 3 421 690
- WO-A1-2014/064302
- WO-A1-2021/255318
- CN-U- 202 227 731
- FR-A1- 2 981 383

## Description

### Domaine technique de l'invention

La présente invention se rapporte au domaine général des piscines, en particulier des piscines privées. L'invention concerne plus particulièrement le domaine de l'entretien des piscines : la filtration, circulation et évacuation de leur eau.

### Art antérieur

Les piscines requièrent un entretien continu, afin de maintenir la qualité de leur eau et éviter la prolifération d'organismes dégradant ladite qualité de l'eau. Cet entretien est pour certains particuliers un frein à l'acquisition d'une piscine.

On utilise pour cet entretien notamment des systèmes à pompes et filtres. Dans ces systèmes, une pompe aspire de l'eau et la fait circuler dans le filtre. Le filtre extrait les microorganismes et autres particules, qui s'accumulent au niveau de l'entrée de celui-ci. L'eau filtrée est ensuite redirigée vers le bassin.

Les filtres de piscine sont généralement des filtres lavables : en faisant circuler de l'eau dans le sens inverse de celui de la filtration de l'eau, les particules accumulées dans le filtre sont extraites et emportées par l'eau circulant en sens inverse. Le filtre est alors réutilisable.

L'eau de la piscine doit aussi pouvoir être recirculée régulièrement afin d'éviter la stagnation et surtout lorsqu'une addition ponctuelle de chlore (« choc chlore »), notamment sous forme de granulés de dichloroisocyanurate de sodium, est effectuée. Un problème rencontré dans le cas des piscines de particuliers est que le chlore (sous forme d'ion hypochlorate) est retenu par le filtre.

Il est donc nécessaire de prévoir un contournement du filtre.

L'eau doit en outre pouvoir être évacuée vers les égouts, après le lavage du filtre et pour la vidange ou la mise à sec de la piscine.

Ces différentes opérations multiplient les conduites d'eau et les vannes à actionner pour basculer entre lesdites conduites. Ceci rend la gestion de l'entretien compliquée pour les utilisateurs des piscines sans connaissances spécifiques du domaine.

Les piscines publiques, à bassin de taille plus importante, utilisent pour l'entretien de leur eau des systèmes fonctionnant en continu : une pompe aspire de l'eau en continu, le filtrage est effectué sur cette eau aspirée, ainsi que d'autres opérations telles qu'une désinfection au rayonnement ultraviolet, addition de chlore (notamment par barbotage de dichlore gazeux), chauffage de l'eau, etc.

Les grands bassins de plusieurs milliers de mètres cubes, ainsi que les bâtiments de grande taille des piscines publiques justifient de construire des unités de traitement de l'eau de taille importante, comprenant toutes les conduites et systèmes d'entretien de l'eau. Ces unités se présentent sous forme de local dédié, abritant tous les systèmes. Des spécialistes paramètrent et ajustent les différents sous-systèmes de ces unités en fonction de la taille du bassin, du nombre d'utilisateurs, de la température etc. et effectuent les opérations de routine sur lesdites unités telles que le remplacement de bombonnes de chlore gazeux, l'augmentation ou réduction du débit des pompes ou du barboteur de chlore etc.

Cependant, un particulier ayant acquis un bassin de taille modeste ne peut pas forcément dédier un local entier à l'entretien automatisé de sa piscine, ni employer un spécialiste de l'entretien des piscines. Un tel local représenterait un surcoût et une perte de surface de terrain.

Du fait des volumes d'eau importants et de l'utilisation intensive et continue des bassins, le fonctionnement en continu des systèmes de traitement de l'eau, au moins pendant que lesdits bassins sont en utilisation, est justifié malgré les coûts qu'il engendre dans le cas d'une piscine publique.

Cependant, dans le cas d'une piscine privée, utilisée par intermittence et avec une intensité moindre, le fonctionnement en continu n'est pas justifié économiquement.

Il existe notamment pour les bassins privés des vannes monolithiques dites vannes multivoies et en particulier « six-voies » qui comportent un sélecteur à plusieurs positions, chaque position correspondant à un mode de fonctionnement particulier (filtration, lavage du filtre, vidange etc.).

Ces vannes présentent un risque élevé de fuite dans la durée, du fait d'un sélecteur complexe et de pièces d'étanchéité mobiles. En outre, leur nature monolithique implique qu'elles doivent être changées dans leur totalité en cas de défaillance d'un élément.

Ainsi, il existe un besoin pour un système de traitement de l'eau de piscine qui soit compact et facile d'utilisation. En particulier, ledit système doit pouvoir être utilisé par des utilisateurs sans connaissances préalables particulières.

Les documents CN202227731 et WO2014/064302 décrivent des dispositifs à vannes pour la gestion de l'entretien d'un bassin artificiel, mais ils présentent un nombre limité et insuffisant de fonctionnalités, notamment pour permettre l'injection de chlore dans l'eau.

### Brève description de l'invention

Afin de répondre à ce besoin, l'invention propose un dispositif de distribution d'eau pour l'entretien d'un bassin, en particulier d'un bassin artificiel, comprenant :
- une entrée d'eau configurée pour être raccordée à une pompe pompant de l'eau du bassin,
- une première et une deuxième conduite, en parallèle l'une de l'autre et raccordées à l'entrée d'eau à une extrémité, la première conduite étant configurée pour être raccordée à une évacuation d'eau à l'autre extrémité, et la deuxième conduite étant configurée pour être raccordée à un refoulement débouchant dans le bassin, caractérisé en ce qu'il comporte :

- deux connecteurs pour un filtre, configurés pour être connectées à un filtre filtrant l'eau du bassin lorsque de l'eau circule à travers ledit filtre dans un sens de filtration et la circulation de l'eau dans le sens contraire entraînant un rinçage du filtre, un premier connecteur formant entrée de filtre étant disposé sur la première conduite, entre l'entrée d'eau et l'évacuation d'eau, et un deuxième connecteur formant sortie de filtre étant disposé sur la deuxième conduite, entre l'entrée d'eau et le refoulement,
- des vannes à actionnement piloté, et une unité de contrôle configurée pour actionner lesdites vannes, et pour faire passer, en actionnant les vannes, de l'eau pompée du bassin :
   * de l'entrée d'eau au connecteur de la première conduite, et du connecteur de la deuxième conduite vers le refoulement dans un mode filtration,
   * de l'entrée d'eau au connecteur de filtre de la deuxième conduite, et du connecteur vers l'évacuation d'eau dans un mode lavage,
   * de l'entrée d'eau au refoulement sans passer par le filtre dans un mode recirculation. Ce dispositif permet un entretien simplifié et au moins partiellement automatisé. L'unité de contrôle gérant l'état ouvert ou fermé des vannes, un actionnement faux et potentiellement dangereux est évité. Les différents éléments, conduites, vannes, etc. peuvent en outre être interchangés séparément.

Le dispositif comporte en outre une conduite de contournement du filtre, qui connecte la première et la deuxième conduite en parallèle du filtre, et :
- une première vanne entre l'entrée d'eau et le connecteur pour filtre de la première conduite,
- une deuxième vanne entre le connecteur pour filtre de la première conduite et la conduite de contournement du filtre,
- une troisième vanne entre l'entrée d'eau et le connecteur pour filtre de la deuxième conduite,
- une quatrième vanne au niveau du connecteur pour filtre de la deuxième conduite,
- une cinquième vanne au niveau de la conduite de contournement du filtre,
- une sixième vanne sur la deuxième conduite entre la conduite de contournement du filtre et le refoulement.

Le mode refoulement est en particulier indiqué lors de l'adjonction de chlore, qui n'est pas retenu par le filtre qui est contourné.

Le dispositif peut en outre présenter une ou plusieurs des caractéristiques suivantes.

L'unité de contrôle est alors avantageusement configurée pour faire passer, en actionnant les vannes, de l'eau pompée du bassin artificiel de l'entrée d'eau au connecteur pour filtre de la première conduite, et du connecteur pour filtre de la deuxième conduite vers l'évacuation d'eau dans un mode rinçage.

Ce mode rinçage permet d'évacuer les particules ressortant du filtre lors d'un retour en mode filtration après lavage du filtre.

L'unité de contrôle peut être connectée à un terminal présentant une interface, comportant au moins un commutateur, dont l'actionnement cause le basculement entre différents modes de fonctionnement.

L'unité de contrôle peut être connectée à une antenne, configurée pour connecter l'unité de contrôle et le terminal, sur lequel est disposé le commutateur.

L'unité de contrôle peut en outre être connectée à une horloge, et être programmable pour basculer automatiquement entre différents modes de fonctionnement à des moments prédéterminés.

L'unité de contrôle peut être configurée pour basculer entre un mode automatique, dans lequel le basculement entre différents modes de fonctionnement est automatique à des moments prédéterminés, et un mode de fonctionnement manuel, dans lequel le basculement entre différents modes de fonctionnement est géré par l'actionnement du commutateur par l'utilisateur.

L'unité de contrôle peut être configurée pour exécuter des cycles de basculement entre les différents modes de fonctionnement, avec :
- un fonctionnement en mode filtration pendant une première durée, puis
- un fonctionnement en mode lavage pendant une deuxième durée.

L'unité de contrôle peut être configurée pour exécuter des cycles comportant en outre un fonctionnement en mode rinçage pendant une troisième durée après chaque fonctionnement en mode lavage pendant une deuxième durée.

### Brève description des figures

D'autres avantages et caractéristiques apparaîtront à la lecture de la description suivante des figures, parmi lesquelles :
La figure 1 est une représentation schématique d'un bassin avec un dispositif d'entretien de l'eau,
La figure 2 est une représentation schématique d'un premier mode de réalisation de dispositif de distribution d'eau selon l'invention, pour le dispositif d'entretien de l'eau de la figure 1,
La figure 3 est une représentation schématique d'un deuxième mode de réalisation de dispositif de distribution d'eau ne faisant pas partie de l'invention telle que revendiquée, pour le dispositif d'entretien de l'eau de la figure 1,
La figure 4 est une représentation schématique d'une unité de contrôle pour le dispositif des figures 2 et 3, avec différents éléments connectés à ladite unité de contrôle,
La figure 5 est un organigramme illustrant le fonctionnement du dispositif de distribution d'eau des figures 2 et 3.

Les modes de réalisation présentés dans les figures et décrits ci-après sont donnés à titre d'exemple descriptif et non limitatif.

### Description détaillée des figures

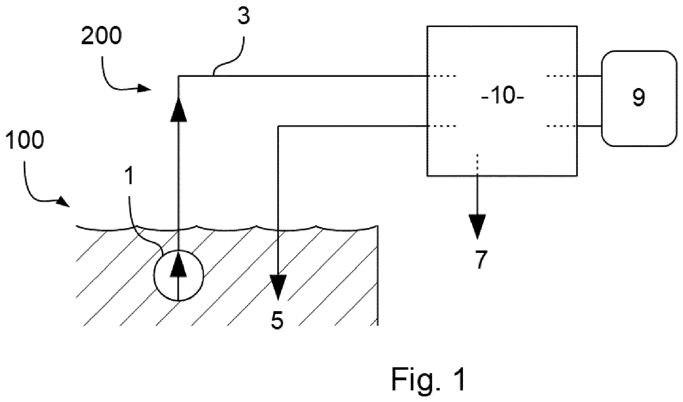

La figure 1 est une représentation schématique d'un bassin 100 avec un dispositif d'entretien de l'eau 200.

Le bassin 100 est notamment un bassin artificiel, par exemple de piscine, de baignade, de jacuzzi ou autre.

Le dispositif d'entretien de l'eau 200 comporte notamment : une pompe 1 et un dispositif de distribution d'eau 10, la pompe 1 étant connectée à une entrée d'eau 3 dudit dispositif de distribution d'eau 10.

La pompe 1 est par exemple intégrée à un robot d'entretien, qui parcourt le fond du bassin, éventuellement équipé de brosses rotatives. En alternative, la pompe 1 peut être déportée, et se trouver dans, par exemple, un local dédié qui contient le reste du dispositif d'entretien de l'eau 200, si un tel local est disponible.

Le dispositif de distribution d'eau 10 est connecté à un refoulement 5, débouchant dans le bassin 100, et à une évacuation d'eau 7, débouchant par exemple dans un raccord aux égouts ou à une évacuation d'eaux pluviales.

Un filtre 9 est connecté au dispositif de distribution d'eau 10 par deux connecteurs de filtre 11, 13.

Le filtre 9 est notamment un filtre réversible ou lavable. Ces filtres sont conçus pour filtrer l'eau lorsqu'elle les traverse dans un sens, dans le sens de filtration, et pour être lavés par ladite eau lorsqu'elle les traverse dans l'autre sens, dans le sens de lavage. Par exemple, les filtres à sable sont de tels filtres lavables : dans leur sens de filtration les particules (et une partie des solutés) sont retenues par le sable, et dans leur sens de lavage l'eau emporte les particules préalablement retenues en mode filtration.

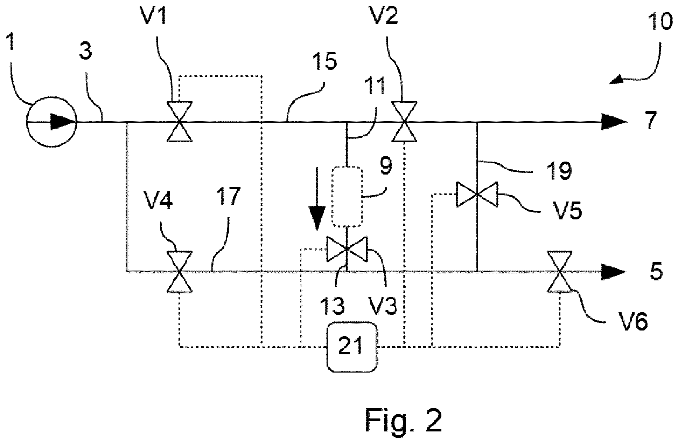

Un premier mode de réalisation de dispositif de distribution d'eau 10 est montré plus en détail en figure 2.

Le dispositif de distribution d'eau 10 comporte une première conduite 15 et une deuxième conduite 17, en parallèle l'une de l'autre et raccordées à l'entrée d'eau 3, et donc à la pompe 1, à une extrémité. La première conduite 15 est configurée pour être raccordée à l'évacuation d'eau 7 à l'extrémité opposée à l'entrée d'eau 3. La deuxième conduite 17 est configurée pour être raccordée au refoulement 5.

Une conduite de contournement 19 du filtre 9 connecte la première et la deuxième conduite 15, 17 en parallèle du filtre 9.

Le premier connecteur de filtre 11, formant entrée du filtre 9, est disposé sur la première conduite 15, entre l'entrée d'eau 3 et l'évacuation 5, et le second connecteur de filtre 13, formant sortie du filtre 9, est disposé sur la deuxième conduite 17, entre l'entrée d'eau 3 et le refoulement 5.

Lorsque le filtre 9 est connecté aux connecteurs de filtre 11, 13 et correctement orienté, de l'eau entrant par l'entrée du filtre 9 ressort filtrée par la sortie du filtre 9. Dans le sens inverse, de l'eau entrant par la sortie du filtre 9 ressort chargée des particules auparavant filtrées par l'entrée du filtre 9.

Une flèche indique en figure 2 le sens de circulation d'eau entraînant une filtration : du connecteur 11 de la première conduite 15 (qui est donc l'entrée de filtre 9) au connecteur 13 de la deuxième conduite 17 (qui est donc la sortie de filtre 9).

Une circulation en sens inverse au sens de filtration entraîne le lavage du filtre 9 en emportant une partie des particules préalablement filtrées.

Le dispositif de distribution d'eau 10 comporte des vannes V1, V2, V3, V4, V5, V6 à actionnement piloté, et une unité de contrôle 21 configurée pour actionner lesdites vannes V1 à V6.

L'unité de contrôle 21 comporte notamment une mémoire électronique et des moyens de calcul, tels qu'un processeur. L'unité de contrôle 21 pilote par exemple les vannes V1 à V6 au moyen d'actionneurs électroniques tels que des transistors.

L'unité de contrôle 21 peut être un boîtier dédié, ou bien être intégrée dans un circuit de contrôle des dispositifs du bassin 100, contrôlant en outre d'autres systèmes du bassin (éclairage, volet de fermeture du bassin 100, pompe 1, etc.).

Les vannes V1 à V6 sont par exemple des électrovannes, et l'actionnement des vannes V1 à V6 les fait basculer entre un état ouvert, où de l'eau peut traverser la vanne V1 à V6 considérée, à un état fermé, où la vanne V1 à V6 arrête la circulation d'eau.

En actionnant les vannes V1 à V6, l'unité de contrôle 21 dirige sélectivement l'eau pompée du bassin 100 :
* de l'entrée d'eau 3 au connecteur de filtre 11 de la première conduite 15, et du connecteur de filtre 13 de la deuxième conduite 17 vers le refoulement 5 dans un mode filtration,
* de l'entrée d'eau 3 à la sortie de filtre 13 par la deuxième conduite 17, et de l'entrée de filtre 11 vers l'évacuation 7 dans un mode lavage,
* de l'entrée d'eau 3 au refoulement 5 sans passer par le filtre 9 dans un mode recirculation,
* de l'entrée d'eau 3 au connecteur de filtre 11 de la première conduite 15, et du connecteur de filtre 13 de la deuxième ligne 17 vers l'évacuation d'eau 7 via la conduite de contournement du filtre 19 dans un mode rinçage.

La présence des trois modes de fonctionnement filtration, lavage et recirculation permet la gestion d'un bassin privé de taille modeste, de façon au moins partiellement automatisée : le mode filtration est adopté pour entretenir la limpidité de l'eau, et le mode lavage permet l'entretien du filtre 9. Le mode recirculation permet à l'utilisateur d'ajouter du chlore sous forme de granulés ou liquide, tout en évitant que le filtre 9 n'absorbe le chlore ajouté.

Pour pouvoir basculer entre ces différents modes, les vannes V1 à V6 sont notamment disposées comme suit sur le dispositif de distribution d'eau 10.

Une première vanne V1 est disposée sur la première conduite 15 entre l'entrée d'eau 3 et le connecteur pour filtre 11 de la première conduite 15.

Une deuxième vanne V2 est disposée entre le connecteur pour filtre 11 de la première conduite 15 et la conduite de contournement du filtre 19.

Une troisième vanne V3 est disposée sur le connecteur pour filtre 13 de la deuxième conduite 17.

Une quatrième vanne V4 est disposée entre l'entrée d'eau 3 et le connecteur pour filtre 13 de la deuxième conduite 17.

Une cinquième vanne V5 située au niveau de la conduite de contournement du filtre 19.

Une sixième vanne V6 située sur la deuxième conduite 17 entre la conduite de contournement du filtre 19 et le refoulement 5.

Pour diriger l'eau du bassin 100 dans le mode filtration de l'entrée d'eau 3 au refoulement 5 en passant par le filtre 9, l'unité de contrôle 21 bascule les états des vannes V1 à V6 de sorte que la première vanne V1 est ouverte, la deuxième vanne V2 est fermée, mais n'est en fait pas atteinte par l'eau, la troisième vanne V3 est ouverte, la quatrième vanne V4 est fermée, la cinquième vanne V5 est fermée, et la sixième vanne V6 est ouverte.

Pour diriger l'eau du bassin 100 dans le mode recirculation, de l'entrée d'eau 3 au refoulement 5 sans passer par le filtre 9, l'unité de contrôle 21 bascule les états des vannes V1 à V6 de sorte que la première vanne V1 est fermée, la deuxième vanne V2 est fermée, la troisième vanne V3 est fermée, la quatrième vanne V4 est ouverte, la cinquième vanne V5 est fermée, et la sixième vanne V6 est ouverte.

Le mode recirculation est particulièrement indiqué lorsque l'utilisateur effectue un ajout ponctuel de chlore, directement dans le bassin 100 sous forme de dichloroisocyanurate, qui ne doit pas ou peu être arrêté par le filtre 9.

Pour diriger l'eau du bassin 100 dans le mode lavage de l'entrée d'eau 3 à l'évacuation 5 en lavant le filtre 9, l'unité de contrôle 21 bascule les états des vannes V1 à V6 de sorte que la première vanne V1 est fermée, la deuxième vanne V2 est ouverte, la troisième vanne V3 est ouverte, la quatrième vanne V4 est ouverte, la cinquième vanne V5 est fermée, et la sixième vanne V6 est fermée.

Le mode lavage est à utiliser ponctuellement et brièvement pour régénérer le filtre 9, dans lequel les particules filtrées s'accumulent.

Pour diriger l'eau du bassin 100 dans un mode rinçage de l'entrée d'eau 3 à l'évacuation 5 en passant par le filtre 9 dans le sens filtration, l'unité de contrôle 21 bascule les états des vannes V1 à V6 de sorte que la première vanne V1 est ouverte, la deuxième vanne V2 est fermée, la troisième vanne V3 est ouverte, la quatrième vanne V4 est fermée, la cinquième vanne V5 est ouverte, et la sixième vanne V6 est fermée. Le mode rinçage est à utiliser brièvement après un fonctionnement en mode lavage. En effet, le lavage a pour effet de mélanger le sable ou la charge filtrante du filtre 9 et les particules préalablement filtrées.

Lors du retour en mode filtration, en l'absence d'une étape intermédiaire de fonctionnement en mode rinçage, les particules filtrées proche de la sortie du filtre 9 seront emportées et entraînées dans le bassin 100 par les premiers litres d'eau sortant du filtre 9.

En utilisant le mode rinçage brièvement après un fonctionnement en mode lavage, l'eau sortant du filtre 9 et chargée en particules préalablement filtrées est évacuée.

Pour diriger l'eau du bassin 100 dans un mode vidange de l'entrée d'eau 3 à l'évacuation 5 sans passer par le filtre 9, l'unité de contrôle 21 bascule les états des vannes V1 à V6 de sorte que la première vanne V1 est ouverte, la deuxième vanne V2 est ouverte, la troisième vanne V3 est fermée, la quatrième vanne V4 est fermée, la cinquième vanne V5 est fermée, et la sixième vanne V6 est fermée.

Dans le mode vidange, l'eau du bassin 100 est dirigée vers l'évacuation d'eau 7 sans passer par le filtre 9. Ce mode vidange permet de vider le bassin 100, partiellement ou en totalité, afin de le préparer pour l'hiver ou pour le remplir ensuite d'eau nouvelle. La vidange du bassin 100 peut, selon des modes de réalisation particuliers, être effectuée au moins partiellement en adoptant un mode de fonctionnement lavage ou rinçage, en passant par le filtre 9 soit dans le sens lavage (mode lavage) ou filtration (mode rinçage). Dans ces modes de fonctionnement, l'eau est dirigée vers l'évacuation 5.

D'autres modes de fonctionnement sont aussi possibles : un mode fermé, dans lequel toutes les vannes V1 à V6 sont fermées, et un mode de mise à sec, dans lequel toutes les vannes V1 à V6 sont ouvertes. Le mode fermé est par exemple adopté en hiver ou lorsqu'il est prévu de ne pas utiliser le bassin 100 pendant une période prolongée. Le mode mise à sec permet, avant un passage en mode fermé et après la vidange du bassin 100, d'éviter qu'il ne reste de l'eau dans une section des conduites 15, 17, eau qui, en gelant, peut endommager le dispositif de distribution d'eau 10.

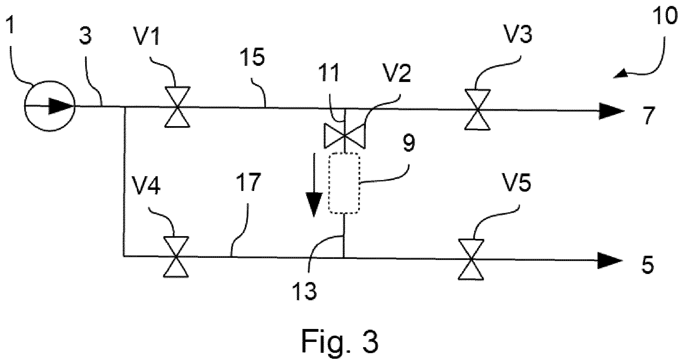

La figure 3 montre un mode de réalisation alternatif de dispositif de distribution d'eau 10, ne faisant pas partie de l'invention telle que revendiquée, particulièrement indiqué pour les bassins de petite taille (volume total inférieur à 30 mètres cube typiquement) utilisant un filtre 9 de petite taille.

L'unité de contrôle 21 et les liaisons de celle-ci avec les vannes V1 à V5 ne sont pas représentés en figure 3, mais sont toutefois présents comme en figure 2.

Ce dispositif de distribution d'eau 10 diffère de celui de la figure 2 en ce qu'il ne comporte pas de conduite de contournement du filtre 19, et par le nombre et la disposition de ses vannes V1 à V5, au nombre de cinq au lieu de six.

Une première vanne V1 est disposée sur la première conduite 15 entre l'entrée d'eau 3 et le connecteur pour filtre 11 de la première conduite 15.

Une deuxième vanne V2 est disposée sur le connecteur pour filtre 11 de la première conduite 15.

Une troisième vanne V3 est disposée entre le connecteur pour filtre 11 de la première conduite 15 et l'évacuation d'eau 7.

Une quatrième vanne V4 est disposée entre l'entrée d'eau 3 et le connecteur pour filtre 13 de la deuxième conduite 17.

Une cinquième vanne V5 située entre le connecteur pour filtre 13 de la deuxième conduite 17 et le refoulement 5.

Pour diriger l'eau du bassin 100 dans le mode filtration de l'entrée d'eau 3 au refoulement 5 en passant par le filtre 9, l'unité de contrôle 21 bascule les états des vannes V1 à V5 de sorte que la première vanne V1 est ouverte, la deuxième vanne V2 est ouverte, la troisième vanne V3 est fermée, la quatrième vanne V4 est fermée et la cinquième vanne V5 est ouverte.

Pour diriger l'eau du bassin 100 dans le mode recirculation, de l'entrée d'eau 3 au refoulement 5 sans passer par le filtre 9, l'unité de contrôle 21 bascule les états des vannes V1 à V6 de sorte que la première vanne V1 est fermée, la deuxième vanne V2 est fermée, la troisième vanne V3 est fermée, la quatrième vanne V4 est ouverte et la cinquième vanne V5 est ouverte.

Pour diriger l'eau du bassin 100 dans le mode lavage de l'entrée d'eau 3 à l'évacuation 5 en lavant le filtre 9, l'unité de contrôle 21 bascule les états des vannes V1 à V6 de sorte que la première vanne V1 est fermée, la deuxième vanne V2 est ouverte, la troisième vanne V3 est ouverte, la quatrième vanne V4 est ouverte et la cinquième vanne V5 est fermée.

Le mode de réalisation de la figure 3 ne permet pas de mode rinçage, dans lequel de l'eau est injectée dans le filtre 9 dans le sens de filtration, puis dirigée vers l'évacuation d'eau 7.

En particulier, le mode rinçage est superflu pour les bassins 100 de petite taille, pour lesquels un filtre 9 de petite taille est utilisé, filtre 9 qui ne contient qu'une quantité réduite de particules filtrées avant lavage.

Aussi, le mode de réalisation de la figure 3 permet, en s'affranchissant du mode rinçage, de réduire le nombre de vannes V1 à V5, et ainsi de réduire l'encombrement et le coût du dispositif de distribution d'eau 10. Plus avant, la taille et la capacité de l'unité de contrôle 21 peuvent être réduites, du fait du nombre réduit de vannes V1 à V5, avec moins de lignes reliant l'unité de contrôle 21 aux vannes V1à V5.

La gestion des cycles de lavage du filtre 9 en est aussi simplifiée.

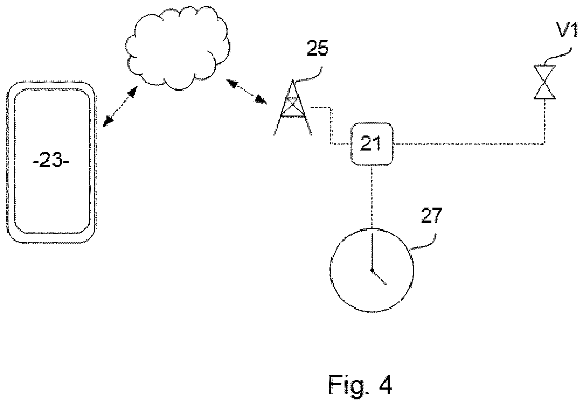

La figure 4 montre plus en détail l'unité de contrôle 21 et différents éléments auquel elle est connectée.

L'unité de contrôle 21 est montrée reliée à une vanne V1 dont elle contrôle l'état ouvert ou fermé. Les autres vannes V2 à V6 ou V2 à V5 ne sont pas représentées pour la clarté.

L'unité de contrôle 21 est notamment reliée à un terminal 23, qui forme interface avec l'utilisateur en affichant un ou plusieurs commutateurs virtuels avec lesquels l'utilisateur interagit.

Le terminal 23 est ici par exemple un téléphone, sur lequel une application correspondante est installée. En alternative, le terminal 23 peut être un simple boîtier pourvu de commutateurs avec lesquels l'utilisateur interagit.

L'unité de contrôle 21 est notamment reliée à une antenne 25, par exemple un émetteur Wi-Fi ou Bluetooth, qui relie l'unité de contrôle 21 au terminal 23 portant l'interface. L'unité de contrôle 21 est aussi reliée à une horloge 27, éventuellement intégrée dans l'unité de contrôle 21 sous forme de circuit intégré.

Selon le mode de réalisation représenté, l'antenne 21 est un adaptateur Wifi, qui est connecté à internet (représenté par un nuage). Le terminal 23 est alors un téléphone ou appareil connecté, sur lequel une application de gestion dédiée est installée.

L'unité de contrôle 21 est alors avantageusement programmable pour basculer automatiquement entre différents modes de fonctionnement à des moments prédéterminés, choisis par l'utilisateur.

L'unité de contrôle 21 peut alors basculer entre un mode automatique, dans lequel le basculement entre différents modes de fonctionnement est automatique et à des moments prédéterminés, et un mode de fonctionnement manuel, dans lequel le basculement entre différents modes de fonctionnement est géré par l'actionnement du commutateur.

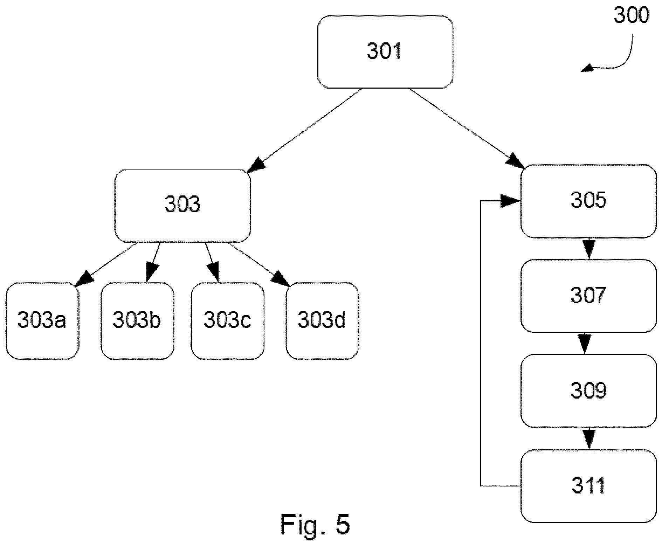

La figure 5 illustre un tel fonctionnement sous forme d'organigramme.

Le procédé de gestion 300 du dispositif d'entretien 200 commence par une étape de sélection préalable 301 par l'utilisateur du mode manuel ou automatique.

Si l'utilisateur choisit le mode manuel, une étape de sélection manuelle 303 du mode de fonctionnement suit, dans laquelle l'utilisateur se voit proposer les modes de fonctionnement accessibles : filtration, recirculation, lavage, rinçage, etc.

L'utilisateur choisit alors lors d'une étape de choix parmi les modes de fonctionnement accessibles 303a, 303b, 303c, 303d.

Il est notamment prévu que l'utilisateur puisse choisir un mode de fonctionnement « choc chlore » dans lequel l'unité de contrôle 21 bascule le dispositif de distribution d'eau 10 en mode recirculation pendant au moins une durée prédéterminée, voire jusqu'à ce que l'utilisateur bascule manuellement dans un autre mode de fonctionnement. Le mode « choc chlore » est alors engagé par l'utilisateur au moment où il ajoute du chlore dans l'eau du bassin, notamment sous forme soluble telle que le dichloroisocyanurate de sodium.

L'utilisateur bascule ainsi entre les différents modes proposés selon les besoins qu'il estime appropriés pour l'entretien de son bassin 100.

Si l'utilisateur choisit le mode automatique, l'unité de contrôle 21 s'occupe alors du basculement entre les différents modes de fonctionnement du dispositif d'entretien 200, notamment en exécutant des cycles de basculement entre les différents modes de fonctionnement, avec :
- un fonctionnement en mode filtration 305 pendant une première durée, puis
- un fonctionnement en mode lavage 307 pendant une deuxième durée,
- un fonctionnement en mode rinçage 309, si le dispositif de distribution d'eau 10 le permet, pendant une troisième durée.

Eventuellement, l'unité de contrôle 21 peut en outre basculer, après le fonctionnement en mode lavage 307, ou rinçage 309 si présent, en mode recirculation 311 pour une quatrième durée, avant de retourner en mode filtration 305 et donc de recommencer le cycle.

Ces cycles filtration 305, lavage 307 puis rinçage 309 correspondent à la procédure d'utilisation (filtration 305) et d'entretien du filtre 9 (lavage 307 puis rinçage 309). Lesdits cycles sont exécutés automatiquement, et les durées des différents modes de fonctionnement peuvent être optimisés selon des critères tels que le volume du bassin 100, la température et la chimie de l'eau du bassin 100, l'intensité d'utilisation du bassin 100, la pression dans le filtre 9, le niveau de réservoirs de produits d'entretien du bassin 100 (précurseur de chlore, régulateurs de pH, etc.), la température extérieure etc.

L'unité de contrôle 21 peut pour ce faire être reliée à des capteurs correspondants tels que des thermomètres, des capteurs de conductimétrie, des sondes pH et redox, des capteurs d'absorbance etc. pour optimiser les durées des modes de fonctionnement par exemple selon des tables stockées dans une mémoire électronique de l'unité de contrôle 21.

En captant la pression dans le filtre 9, l'unité de contrôle 21 peut permettre d'éviter d'endommager le dispositif d'entretien 200, en ce que l'unité de contrôle 21 peut couper la pompe 3 dès qu'un seuil de pression est atteint dans le filtre 9, avant la rupture des connecteurs 11, 13 ou d'une ou plusieurs vannes V1 à V6, ou en alternative basculer en mode lavage avec ou sans envoi d'une alerte à l'utilisateur.

Des modes de réalisation supplémentaires sont directement dérivables de ceux précédemment décrits en connectant l'unité de contrôle 21 à des dispositifs supplémentaires tels que :
- une arrivée d'eau injectant de l'eau dans le bassin 100, à parti d'un réseau urbain ou d'un réservoir, et dont l'unité de contrôle 21 contrôle le débit,
- un volet fermant sélectivement le bassin 100,
- des éclairages,
- des buses massantes ou décoratives (chute d'eau artificielle, fontaine etc.),
- un électrolyseur de sel, fournissant les ions hypochlorate,
- un aspirateur ou robot nettoyeur,
- une alarme prévenant d'une chute, par exemple d'un enfant, dans le bassin,
- une caméra de surveillance,
- des pompes injectant des produits d'entretien à partir de réservoirs.

Notamment, l'unité de contrôle 21 peut mettre en accord le mode de fonctionnement filtration, lavage, rinçage, recirculation avec l'état des dispositifs supplémentaires. Le dispositif de distribution d'eau 10 et le dispositif d'entretien 200 dans lequel il est utilisé permettent une gestion simplifiée et optimisée de l'entretien du bassin 100. L'entretien dudit bassin 100 peut notamment être automatisé.

L'unité de contrôle 21 en contrôlant toutes les vannes V1 à V5 ou V6 et éventuellement la pompe 1 permet d'éviter des erreurs de manipulation, par exemple la fermeture complète des deux conduites 15, 17 alors que la pompe 1 est en fonctionnement. Une telle configuration entraîne une montée en pression dans l'entrée d'eau 3 et la pompe 1 qui peut endommager ces éléments.

La gestion de l'entretien du bassin 100 peut en alternative être gérée par un spécialiste qui possède lui aussi un terminal 23 permettant d'interagir avec l'unité de contrôle 21. L'entretien peut alors être effectué sous forme de service, avec soit l'envoi d'alertes à l'utilisateur, soit l'envoi d'un agent d'entretien lorsqu'une intervention sur le bassin 100 ou le dispositif d'entretien 200 est nécessaire (remplissage de réservoirs de produits d'entretien, panne, défaillance de capteur etc.).

L'entretien du bassin 100 peut alors être effectué même en l'absence de l'utilisateur et en continu.

En outre, l'utilisateur n'étant plus en contact physique avec les vannes et autres éléments du dispositif d' entretien 200, le risque d'électrocution accidentelle est réduit.

## Revendications

1. Dispositif de distribution d'eau pour l'entretien d'un bassin (100), en particulier d'un bassin (100) artificiel, comprenant :
- une entrée d'eau (3) configurée pour être raccordée à une pompe (3) pompant de l'eau du bassin (100),
- une première (15) et une deuxième conduite (17), en parallèle l'une de l'autre et raccordées à l'entrée d'eau (3) à une extrémité, la première conduite (15) étant configurée pour être raccordée à une évacuation d'eau (7) à l'autre extrémité, et la deuxième conduite (17) étant configurée pour être raccordée à un refoulement (5) débouchant dans le bassin (100),
- deux connecteurs (11, 13) pour un filtre (9), configurés pour être connectées à un filtre (9) filtrant l'eau du bassin (100) lorsque de l'eau circule à travers ledit filtre (9) dans un sens de filtration et la circulation de l'eau dans le sens contraire entraînant un rinçage du filtre (9), un premier connecteur (11) formant entrée de filtre (9) étant disposé sur la première conduite (15), entre l'entrée d'eau (3) et l'évacuation d'eau (7), et un deuxième connecteur (13) formant sortie de filtre (9) étant disposé sur la deuxième conduite (17), entre l'entrée d'eau (3) et le refoulement (5),
- des vannes (V1, V2, V3, V4, V5, V6) à actionnement piloté, et une unité de contrôle (21) configurée pour actionner lesdites vannes (V1, V2, V3, V4, V5, V6), et pour faire passer, en actionnant les vannes, de l'eau pompée du bassin (100) :
* de l'entrée d'eau (3) au connecteur (11) de la première conduite (15), et du connecteur (13) de la deuxième conduite (15) vers le refoulement dans un mode filtration,
* de l'entrée d'eau (3) au connecteur de filtre (13) de la deuxième conduite (17), et du connecteur (13) vers l'évacuation d'eau dans un mode lavage,
* de l'entrée d'eau (3) au refoulement (5) sans passer par le filtre (9) dans un mode recirculation ;
**caractérisé en ce qu'**il comporte en outre une conduite de contournement du filtre (19), qui connecte la première (15) et la deuxième conduite (17) en parallèle du filtre (9), et en ce **en ce qu'**il comporte :
- une première vanne (V1) entre l'entrée d'eau et le connecteur pour filtre (11) de la première conduite (15),
- une deuxième vanne (V2) entre le connecteur pour filtre (11) de la première conduite (15) et la conduite de contournement du filtre (19),
- une troisième vanne (V3) entre l'entrée d'eau (3) et le connecteur pour filtre (13) de la deuxième conduite (17),
- une quatrième vanne (V4) au niveau du connecteur pour filtre (13) de la deuxième conduite (17),
- une cinquième vanne (V5) au niveau de la conduite de contournement du filtre (19),
- une sixième vanne (V6) sur la deuxième conduite (17) entre la conduite de contournement du filtre (19) et le refoulement (5).

2. Dispositif selon la revendication 1 **caractérisé en ce que** l'unité de contrôle (21) est configurée pour faire passer, en actionnant les vannes, de l'eau pompée du bassin artificiel :
* de l'entrée d'eau au connecteur pour filtre (11) de la première conduite (15), et du connecteur pour filtre (13) de la deuxième conduite (17) vers l'évacuation d'eau (7) dans un mode rinçage.

3. Dispositif selon l'une des revendications précédentes, **caractérisé en ce que** l'unité de contrôle (21) est connectée à un terminal (23) présentant une interface, comportant au moins un commutateur, dont l'actionnement cause le basculement entre différents modes de fonctionnement.

4. Dispositif selon la revendication précédente, **caractérisé en ce que** l'unité de contrôle (21) est connectée à une antenne (25), configurée pour connecter l'unité de contrôle (21) et le terminal (23), sur lequel est disposé le commutateur.

5. Dispositif selon la revendication 3 ou 4, **caractérisé en ce que** l'unité de contrôle (21) est connectée à une horloge (27), et **en ce que** l'unité de contrôle (21) est programmable pour basculer automatiquement entre différents modes de fonctionnement à des moments prédéterminés.

6. Dispositif selon la revendication précédente, **caractérisé en ce que** l'unité de contrôle (21) est configurée pour basculer entre un mode automatique, dans lequel le basculement entre différents modes de fonctionnement est automatique à des moments prédéterminés, et un mode de fonctionnement manuel, dans lequel le basculement entre différents modes de fonctionnement est géré par l'actionnement du commutateur par l'utilisateur.

7. Dispositif selon l'une des revendications précédentes, **caractérisé en ce que** l'unité de contrôle (21) est configurée pour exécuter des cycles de basculement entre les différents modes de fonctionnement, avec :
- un fonctionnement en mode filtration (305) pendant une première durée, puis
- un fonctionnement en mode lavage (307) pendant une deuxième durée.

8. Dispositif selon les revendications 7 et 2, **caractérisé en ce que** l'unité de contrôle est configurée pour exécuter des cycles comportant en outre un fonctionnement en mode rinçage (309) pendant une troisième durée après chaque fonctionnement en mode lavage (307) pendant une deuxième durée.

## Patentansprüche

1. Vorrichtung zur Abgabe von Wasser für die Wartung eines Beckens (100), insbesondere eines künstlichen Beckens (100), umfassend:
- einen Wassereinlass (3), der dafür ausgelegt ist, an eine Pumpe (3) angeschlossen zu werden, die Wasser aus dem Becken (100) abpumpt.
- eine erste (15) und eine zweite Leitung (17), die parallel zueinander verlaufen und an einem Ende an den Wassereinlass (3) angeschlossen sind, wobei die erste Leitung (15) dafür ausgelegt ist, am anderen Ende an einen Wasserauslass (7) angeschlossen zu werden, und wobei die zweite Leitung (17) dafür ausgelegt ist, an ein Förderorgan (5) angeschlossen zu werden, welches in das Becken (100) einmündet,
- zwei Verbindungsstücke (11, 13) für ein Filter (9), die dafür ausgelegt sind, an ein Filter (9) angeschlossen zu werden, welches das Wasser des Beckens (100) filtriert, wenn das Wasser in Filtrationsrichtung durch das Filter (9) strömt, und das Strömen des Wassers in der entgegengesetzten Richtung ein Spülen des Filters (9) bewirkt, wobei ein erstes Verbindungsstücke (11), welches den Einlass des Filters (9) bildet, zwischen dem Wassereinlass (3) und dem Wasserauslass (7) an der ersten Leitung (15) angeordnet ist, und ein zweites Verbindungsstück (13), welches des Auslass des Filters (9) bildet, zwischen dem Wassereinlass (3) und dem Förderorgan (5) an der zweiten Leitung (17) angeordnet ist,
- Ventile (V1, V2, V3, V4, V5, V6) mit gesteuerter Betätigung und eine Steuereinheit (21), die dafür ausgelegt ist, die Ventile (V1, V2, V3, V4, V5, V6) zu steuern und durch Betätigung der Ventile zu bewirken, dass das Wasser, welches aus dem Becken (100) abgepumpt wurde, folgendermaßen strömt:
* vom Wassereinlass (3) zum Verbindungsstück (11) der ersten Leitung (15) sowie vom Verbindungsstück (13) der zweiten Leitung (15) zum Förderorgan im Filtrationsmodus,
* vom Wassereinlass (3) zum Filterverbindungsstück (13) der zweiten Leitung (17) sowie vom Verbindungsstück (13) zum Wasserauslass im Waschmodus,
* vom Wassereinlass (3) zum Förderorgan (5), ohne durch das Filter (9) zu strömen, im Umwälzmodus;
**dadurch gekennzeichnet**, sie darüber hinaus eine Leitung (19) zur Umgehung des Filters aufweist, welche die erste Leitung (15) parallel zum Filter (9) mit der zweiten (17) verbindet, und dadurch, dass sie Folgendes aufweist:
- ein erstes Ventil (V1) zwischen dem Wassereinlass und dem Filterverbindungsstück (11) der ersten Leitung (15),
- ein zweites Ventil (V2) zwischen dem Filterverbindungsstück (11) und der ersten Leitung (15) und der Leitung (19) zur Umgehung des Filters,
- ein drittes Ventil (V3) zwischen dem Wassereinlass (3) und dem Filterverbindungsstück (13) der zweiten Leitung (17),
- ein viertes Ventil (V4) auf Höhe des Filterverbindungsstücks (13) der zweiten Leitung (17),
- ein fünftes Ventil (V5) auf Höhe der Leitung (19) zur Umgehung des Filters,
- ein sechstes Ventil (V6), das sich zwischen der Leitung (19) zur Umgehung des Filters und dem Förderorgan (5) an der zweiten Leitung (17) befindet.

2. Vorrichtung nach Anspruch 1, **dadurch gekennzeichnet, dass** die Steuereinheit (21) dafür ausgelegt ist, durch Betätigung der Ventile zu bewirken, dass das Wasser, welches aus dem künstlichen Becken abgepumpt wurde, folgendermaßen strömt:
* vom Wassereinlass zum Filterverbindungsstück (11) der ersten Leitung (15) sowie vom Filterverbindungsstück (13) der zweiten Leitung (17) zum Wasserauslass (7), in einem Spülmodus.

3. Vorrichtung nach einem der vorhergehenden Ansprüche, **dadurch gekennzeichnet, dass** die Steuereinheit (21) an ein Endgerät (23) angeschlossen ist, welches mit einer Benutzeroberfläche versehen ist, die mindestens einen Schalter aufweist, dessen Betätigung ein Umschalten zwischen verschiedenen Betriebsmodi bewirkt.

4. Vorrichtung nach dem vorhergehenden Anspruch, **dadurch gekennzeichnet, dass** die Steuereinheit (21) an eine Antenne (25) angeschlossen ist, die dafür ausgelegt ist, die Steuereinheit (21) mit dem Endgerät (23) zu verbinden, auf welchem der Schalter angeordnet ist.

5. Vorrichtung nach Anspruch 3 oder 4, **dadurch gekennzeichnet, dass** die Steuereinheit (21) an einen Zeitgeber (27) angeschlossen ist, und dadurch, dass die Steuereinheit (21) derart programmiert werden kann, dass sie zu vorbestimmten Zeitpunkten automatisch zwischen verschiedenen Betriebsmodi umschaltet.

6. Vorrichtung nach dem vorhergehenden Anspruch, **dadurch gekennzeichnet, dass** die Steuereinheit (21) dafür ausgelegt ist, zwischen einem automatischen Modus, in welchem das Umschalten zwischen verschiedenen Betriebsmodi zu vorbestimmten Zeitpunkten automatisch erfolgt, und einem manuellen Betriebsmodus umzuschalten, in welchem das Umschalten zwischen verschiedenen Betriebsmodi dadurch erfolgt, dass der Benutzer den Schalter bestätigt.

7. Vorrichtung nach einem der vorhergehenden Ansprüche, **dadurch gekennzeichnet, dass** die Steuereinheit (21) dafür ausgelegt ist, Umschaltzyklen zwischen den verschiedenen Betriebsmodi auszuführen, wobei:
- sie während eines ersten Zeitraum im Filtrationsmodus (305) betrieben wird, woraufhin
- sie während eines zweiten Zeitraums im Waschmodus (307) betrieben wird.

8. Vorrichtung nach den Ansprüchen 7 und 2, **dadurch gekennzeichnet, dass** die Steuereinheit dafür ausgelegt ist, Zyklen auszuführen, die darüber hinaus, jeweils im Anschluss an einen Betrieb im Waschzyklus (307) über einen zweiten Zeitraum, einen Betrieb im Spülmodus (309) über einen dritten Zeitraum aufweisen.

## Claims

1. Water distribution device for the maintenance of a pool (100), in particular an artificial pool (100), comprising:
- a water inlet (3) configured to be connected to a pump (3) pumping water from the pool (100),
- a first (15) and a second pipe (17), in parallel with each other and connected to the water inlet (3) at one end, the first pipe (15) being configured to be connected to a water drain (7) at the other end, and the second pipe (17) being configured to be connected to a discharge (5) opening into the pool (100),
- two connectors (11, 13) for a filter (9), configured to be connected to a filter (9) filtering water from the pool (100) when water flows through said filter (9) in one filtration direction and the flow of water in the opposite direction resulting in a flushing of the filter (9), a first connector (11) forming a filter inlet (9) being arranged on the first pipe (15), between the water inlet (3) and the water drain (7), and a second connector (13) forming a filter outlet (9) being arranged on the second pipe (17), between the water inlet (3) and the discharge (5),
- valves (V1, V2, V3, V4, V5, V6) with controlled actuation, and a control unit (21) configured to actuate said valves (V1, V2, V3, V4, V5, V6), and to pass, by actuating the valves, water pumped from the pool (100):
* from the water inlet (3) to the connector (11) of the first pipe (15), and from the connector (13) of the second pipe (15) to the discharge in a filtration mode,
* from the water inlet (3) to the filter connector (13) of the second pipe (17), and from the connector (13) to the water drain in a washing mode,
* from the water inlet (3) to the discharge (5) without passing through the filter (9) in a recirculation mode;
**characterised in that** it further comprises a filter bypass pipe (19), which connects the first (15) and the second pipe (17) in parallel with the filter (9), and **in that** it comprises:
- a first valve (V1) between the water inlet and the filter connector (11) of the first pipe (15),
- a second valve (V2) between the filter connector (11) of the first pipe (15) and the filter bypass pipe (19),
- a third valve (V3) between the water inlet (3) and the filter connector (13) of the second pipe (17),
- a fourth valve (V4) at the filter connector (13) of the second pipe (17),
- a fifth valve (V5) at the filter bypass pipe (19),
- a sixth valve (V6) on the second line (17) between the filter bypass pipe (19) and the discharge (5).

2. Device according to claim 1, **characterised in that** the control unit (21) is configured to pass, by actuating the valves, water pumped from the artificial pool:
* from the water inlet to the filter connector (11) of the first pipe (15), and from the filter connector (13) of the second pipe (17) to the water drain (7) in a flushing mode.

3. Device according to one of the preceding claims, **characterised in that** the control unit (21) is connected to a terminal (23) having an interface, comprising at least one switch, the actuation of which causes the switching between different operating modes.

4. Device according to the preceding claim, **characterised in that** the control unit (21) is connected to an antenna (25), configured to connect the control unit (21) and the terminal (23), on which the switch is arranged.

5. Device according to claim 3 or 4, **characterised in that** the control unit (21) is connected to a clock (27), and **in that** the control unit (21) is programmable to automatically switch between different operating modes at predetermined times.

6. Device according to the preceding claim, **characterised in that** the control unit (21) is configured to switch between an automatic mode, in which the switching between different operating modes is automatic at predetermined times, and a manual operating mode, in which the switching between different operating modes is managed by the actuation of the switch by the user.

7. Device according to one of the preceding claims, **characterised in that** the control unit (21) is configured to execute switching cycles between the different operating modes, with:
- operation in filtration mode (305) for a first period of time, then
- operation in washing mode (307) for a second period of time.

8. Device according to claims 7 and 2, **characterised in that** the control unit is configured to execute cycles further comprising an operation in flushing mode (309) for a third period of time after each operation in washing mode (307) for a second period of time.
